# EUROPEAN PATENT SPECIFICATION

(11) **EP 1 820 704 B1**
(45) Date of publication and mention of the grant of the patent: **20.08.2008**
(21) Application number: 07102509.2
(22) Date of filing: 15.02.2007
(51) Int. Cl.: B60R 25/00, B60R 25/04, G07C 9/00

(54) **Keyless entry system adapted for motor vehicle**
An ein Kraftfahrzeug angepasstes schlüsselloses Zugangssystem
Système d'entrée sans clé adapté au moteur du véhicule

(30) Priority: 17.02.2006 JP 2006040238
(43) Date of publication of application: 22.08.2007
(73) Proprietor: Calsonic Kansei Corporation, Tokyo 164-8602 (JP); ALPS ELECTRIC CO., LTD., Tokyo 145-8501 (JP)
(72) Inventor: Otsuka, Takashi, Tokyo 164-8602 (JP); Ito, Hisao, Tokyo 164-8602 (JP); Sanpei, Yoshio, Tokyo 145-8501 (JP)
(74) Representative: Intes, Didier Gérard André

(56) References cited:
- DE-A1- 10 056 864
- JP-A- 2001 207 709

## Description

The present invention relates to a keyless entry system adapted for a motor vehicle in which a door can be locked and unlocked by using wireless communication between an on-vehicle keyless entry device and a portable device.

A conventional keyless entry system according to the preamble of claim 1 has a portable device, such as a key fob, for transmitting a pulse signal and an on-vehicle lock/unlock device for locking and unlocking a driver's door or all the doors according to the pulse signal outputted from the portable device. The on-vehicle lock/unlock device controls lock/unlock of door lock(s) as follows.

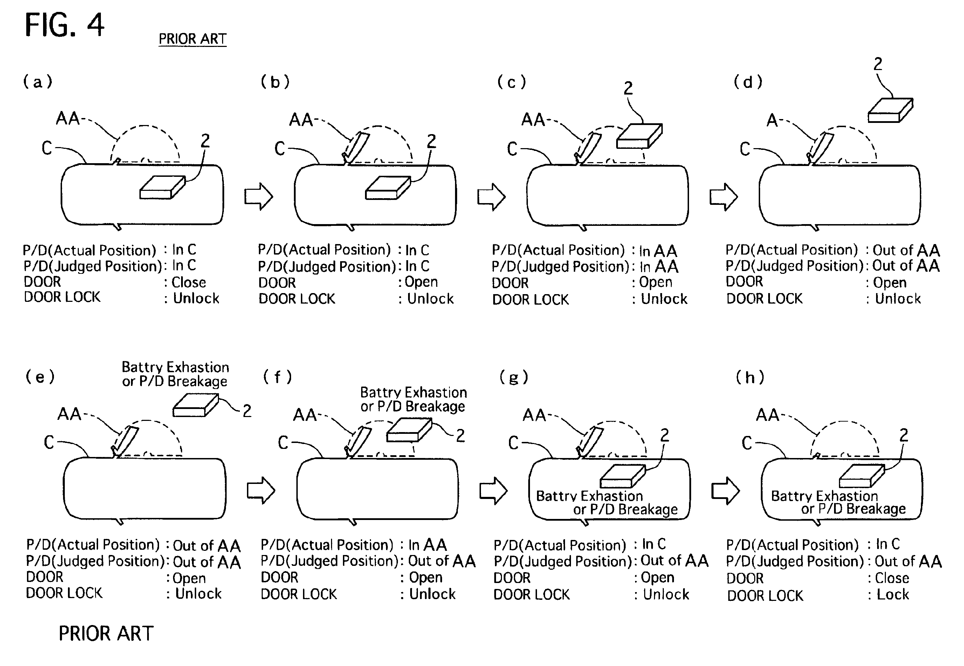

Referring to FIG. 4, in a case where the portable device 2 is in a passenger compartment of a motor vehicle, the portable device 2 is detected by the on-vehicle lock/unlock device 3 to be in the passenger compartment, so that a driver's door is closed and its door lock is in an unlock state, as shown in (a) of FIG. 4.

Then a user, usually a driver, may park the motor vehicle and manually open the door so as to get out of the passenger compartment. In this case, as long as the user stays in the passenger compartment with the portable device 2, the on-vehicle lock/unlock device 3 is kept detecting the portable device 2 to be therein, consequently the door being opened and its door lock being kept in the unlock state, as shown in (b) of FIG. 4.

Then the user with the portable device 2 may get out of the motor vehicle and stays near it, where the on-vehicle lock/unlock device 3 can detect the portable device 2 to be in an exteriorly detectable area AA. In this state, the door is opened and its door lock is kept in the unlock state, as shown in (c) of FIG. 4.

When the user moves out of the exteriorly detectable area AA with the portable device 2, leaving the door open, the on-vehicle lock/unlock device 3 judges it to be out of the exteriorly detectable area AA because of no detection of a signal therefrom. In this state, the door lock is kept in the unlock state, as shown in (d) of FIG. 4, because the door is opened.

The user may return in the vicinity of the door, and consequently the on-vehicle lock/unlock device 3 detects the signal from the portable device 2. Then the user closes the door and gets away from the door with the portable device 2 and the on-vehicle lock/unlock device 3 detects the portable device 2 to be out of the exteriorly detectable area AA, which causes the door to be in a lock state.

Such a conventional keyless entry system is disclosed in Japanese patent application laying-open publication No. 2001 - 207709. This conventional keyless entry system further has an alert function for giving the user a warning of the portable device 2 left behind in the compartment. In this conventional keyless entry system, the on-vehicle lock/unlock device 3 transmits an activation signal again via its exterior antenna when the door is opened. When it receives a response signal from the portable device 2, the door lock is kept to be in the unlock state, while, when it does not receive the response signal, a buzzer alerts the user. Note that the portable device 2 is a key containing a transmitter, a key with a fob containing a transmitter, or the like.

The above known conventional portable device, however, encounters a problem in that the portable device cannot be avoided from being kept locked in the passenger compartment when the portable device 2 is broken or its battery is exhausted in the following situations.

More specifically, the portable device 2 may be broken or its battery is exhausted when the user is out of the exteriorly detectable area AA in a state where the door is opened and its door lock is unlocked, as shown in (e) of FIG. 4. In this case, the user may approach the motor vehicle, where the on-vehicle device 3 cannot detect the portable device 2 although it is within the exteriorly detectable area AA. The user may not notice this abnormality of the portable device 2, since the unlock state of the door lock is similarly to that obtained when the portable device 2 works properly, as shown in (f) of FIG. 4.

Next, the user may place the portable device 2 in the passenger compartment intentionally or unintentionally. In this state, the on-vehicle lock/unlock device 3 cannot detect the portable device 2, while the door lock is kept to be in the unlock state because the door is opened, as shown in (g) of FIG. 4. Then, when the ser closes the door, leaving the portable device 2 in the passenger compartment, the door lock is shifted to a lock state because the on-vehicle lock/unlock device 3 cannot detect the portable device 2. This causes the key to be locked in the passenger compartment, and the user cannot open the door.

On the other hand, the user may bring the key, in a bag with wrong permeability of radio wave, in the passenger compartment, and then close the door, leaving the bag with the key therein, which also causes the key to be locked therein.

In the above-situations, the conventional keyless entry system cannot avoid the key from being kept locked in the passenger compartment.

It is, therefore, an object of the present invention to provide a keyless entry system adapted for a motor vehicle, which overcomes the foregoing drawbacks and can prevent a portable device from being kept locked in a passenger compartment against driver's will.

According to a first aspect of the present invention there is provided a keyless entry system adapted for a motor vehicle where a lock/unlock-command output control means controls a door to be shifted between in a lock state and in an unlock state after an on-vehicle lock/unlock device makes wireless communication with a portable device to execute an authentication process. The lock/unlock-command output control means allows unlocking of the door due to a manually door-opening operation by a user within a predetermined time after the door is locked, when the portable device cannot be detected at an inner side of a passenger compartment and at an outer side of the motor vehicle in a state where the door is closed, in a case where the portable device is not detected after the portable device is detected at the outer side of the motor vehicle in a state where the door is opened.

Therefore, the user can open the door within the predetermined time and get the portable device, locked in the passenger compartment.

Preferably, the keyless entry system further includes a door open/close detecting means for detecting an open/close state of the door. The portable device includes a portable-device side receiving means for detecting search radio wave outputted from the on-vehicle lock/unlock device, and an ID code transmitting means for transmitting a response radio wave containing an ID code, which is used for the authentication by the on-vehicle lock/unlock device, when the search radio wave is received. The on-vehicle lock/unlock device includes an on-vehicle transmitting means for transmitting the search radio wave toward an inner side of the passenger compartment and toward the outer side of the motor vehicle, an on-vehicle receiving means for receiving the response radio wave outputted from the portable device, and the lock/unlock-command output control means for transmitting a lock command signal or an unlock command signal according to the ID code outputted from the portable device. The lock/unlock-command output control means allows the unlocking of the door due to the manually door-opening operation by the user within the predetermined time when the ID code from the portable device cannot be detected at the inner side of the passenger compartment and at the outer side of the motor vehicle in the state where the door is closed, after the ID from the portable device is not detected at the outer side of the motor vehicle in the state where the door is opened.

Therefore, the keyless entry system can prevent the portable device from being kept locked in the passenger compartment by using the search radio wave and the response radio wave.

Preferably, the on-vehicle lock/unlock device continues a process of searching the portable device for monitoring abnormality of the portable device in the state where the door is opened.

Therefore, the on-vehicle lock/unlock device can judge when and how the communication between the portable device 2 and the on-vehicle device 3 fails in.

Preferably, the lock/unlock-command output control means allows the unlocking of only the door which has been closed by the user at last.

Therefore, the other doors are prevented from being opened by another person, thereby improving security of the motor vehicle.

The objects, features and advantages of the present invention will become apparent as the description proceeds when taken in conjunction with the accompanying drawings, in which:
FIG. 1 is a block diagram showing elements of a portable device and an on-vehicle lock/unlock device, which are contained in a keyless entry system of an embodiment according to the present invention;
FIG. 2 is a flow chart of a process of keyless entry control which is executed by the on-vehicle lock/unlock device by communicating between the portable device and the on-vehicle lock/unlock device;
FIG. 3 is a schematic diagram explaining keyless entry control and key-locked-in preventing control executed by the on-vehicle lock/unlock device; and
FIG. 4 is a schematic diagram explaining keyless entry control and key-locked-in preventing control executed by an on-vehicle lock/unlock device of a conventional keyless entry system.

Throughout the following detailed description, similar reference characters and numbers refer to similar elements in all figures of the drawings, and their descriptions are omitted for eliminating duplication.

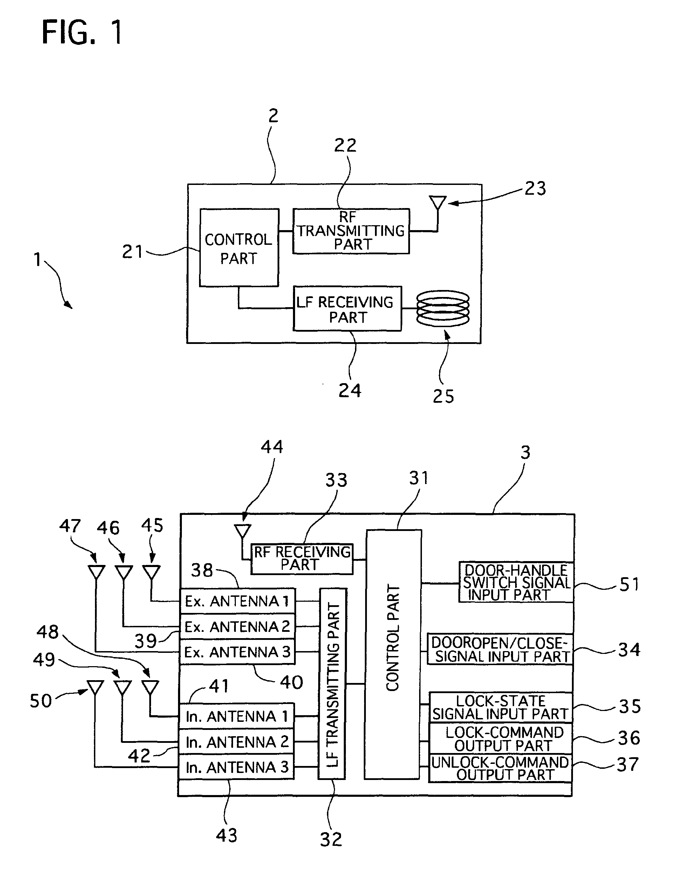

Referring to FIG. 1 of the drawing, there is shown a keyless entry system 1, adapted for a motor vehicle, of a preferred embodiment according to the present invention.

The keyless entry system 1 includes a portable device 2 with which a user can carry and an on-vehicle lock/unlock device 3 installed on a motor vehicle of the user.

The portable device 2 is, for example, a key, a key fob, or the like, which has a control part 21, a radio-frequency (RF) wave transmitting part 22, a transmitting antenna 23, a low-frequency (LF) wave receiving part 24, a receiving coil 25 and a battery, not shown. Incidentally, the LF wave receiving part 24 and the receiving coil 25 correspond to a portable-device side receiving means of the present invention.

The control part 21 stores an identification (ID) code, set differently from one another among motor vehicles, to output the ID code to the RF wave transmitting part 22 when it judges a signal, obtained from the LF wave receiving part 24by signal-processing a search radio wave which is emitted from the on-vehicle lock/unlock device 3 for searching a specific portable device 2 correspondent to the motor vehicle of the user, to correspond to the ID code stored therein. In addition, the control part 21 whether judges the search radio wave is emitted from an exterior of the motor vehicle or from an interior of a passenger compartment thereof, and outputs its judgment result to the RF wave transmitting part 22.

The radio-frequency wave transmitting part 22 is capable of changing signals received from the control part 21 to radio-frequency wave signals and output them, as response radio wave, to the transmitting antenna 23. These signals contain information on the ID code and information on which antenna emitted the search radio wave received by the receiving coil 25.

The transmitting antenna 23 is capable of transmitting the RF wave signals inputted from the RF wave transmitting part 22.

The LF wave receiving part 24 is capable of processing the search radio wave to change the signal, then outputting the signal to the control part 21.

The receiving coil 25 is capable of receiving the search radio wave emitted from the on-vehicle lock/unlock device to send it to the LF wave receiving part 24. Incidentally, the receiving coil 25 and the LF wave receiving part 24 correspond to a portable-device side receiving means of the present invention.

On the other hand, the on-vehicle lock/unlock device 3 has a control part 31, a low-frequency wave transmitting part 32, a radio-frequency wave receiving part 33, a door open/close-signal input part 34, a lock-state signal input part 35, a lock-command output part 36, an unlock-command output part 37, exterior-antenna output parts 38 to 40, interior-antenna output parts 41 to 43, a receiving antenna 44, exterior antennas 45 to 47, interior antennas 48 to 50 and a door-handle switch signal input part 51.

Incidentally, the LF wave transmitting part 32, the exterior-antenna output parts 38 to 40 and the exterior antennas 45 to 47 correspond to an outwardly transmitting means of the present invention, and the LF wave transmitting part 32, the interior-antenna output parts 41 to 43 and the interior antennas 48 to 50 correspond to an inwardly transmitting means of the present invention. The outwardly transmitting means and the inwardly transmitting means correspond to an on-vehicle transmitting means of the present invention. The RF wave receiving part 33 and the receiving antenna 44 correspond to an on-vehicle receiving means of the present invention. The lock-command output part 36 and the unlock-command output part 37 correspond to a lock/unlock-command output control means of the present invention. The door open/close-signal input part 34 and door sensors, not shown, arranged at each door for detecting an open/close state of the doors correspond to a door open/close detecting means of the present invention.

The control part 31 is capable of processing information signals outputted from the lock-state signal input part 35 and the information signal outputted from the portable device 2 via the RF wave receiving part 33, then controlling outputs to LF wave transmitting part 32, the lock-command output part 36 and the unlock-command output part 37.

The LF wave transmitting part 32 is capable of changing the search radio wave signal, for searching the portable device 2 correspondent to the motor vehicle of the user, to the radio wave signal to output it to the exterior-antenna output parts 38 to 40 and the interior-antenna output parts 41 to 43.

The RF wave receiving part 33 is capable of receiving the radio wave signals, which indicates the information containing the ID code of the portable device 2 from the receiving antenna 44 to change it to the signals and output them to control part 31.

The door open/close-signal input part 34 is capable of receiving signals of information on an open/close state of each door from the door sensors to input them to the control part 31.

The lock-state signal input part 35 is capable of receiving lock-state signals of information on a lock/unlock state of each door lock, not shown, to input them to the control part 31.

The lock-command output part 36 is capable of outputting a lock command signal for locking the door locks according to a lock command outputted from the control part 31.

The unlock-command output part 37 is capable of outputting an unlock command signal for unlocking the door locks according to an unlock command outputted from the control part 31.

The exterior-antenna output parts 38 to 40 are capable of outputting the radio wave signals to the exterior antennas 45 to 47. The interior-antenna output parts 41 to 43 are capable of outputting the radio wave signals to the interior antennas 48 to 50.

The exterior antennas 45 to 47 are capable of transmitting the radio wave signals toward the exterior of the motor vehicle, and the interior antennas 48 to 50 are capable of transmitting the radio wave signals toward the interior of the passenger compartment.

The door-handle switch signal input part 51 is capable of receiving signals of information on an operating state of each door handles, not shown, from their sensors to input them to the control part 31.

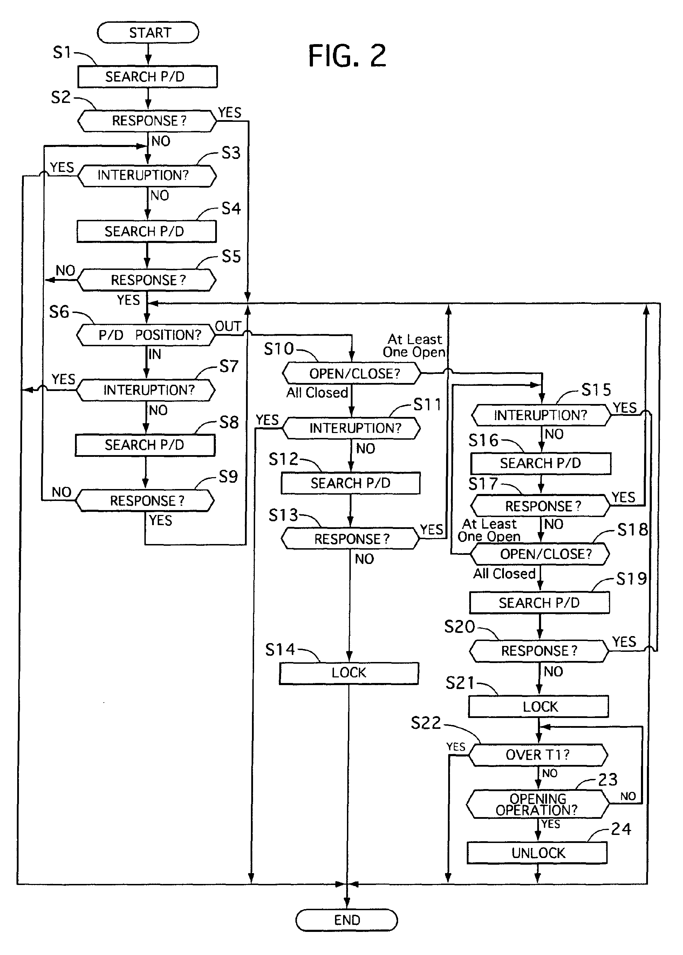

The control part 31 of the on-vehicle lock/unlock device 3 executes keyless entry control process, whose flow chart is shown in FIG. 2. Incidentally, the control process of FIG. 2 is carried out after the ID code has been authenticated and the door locks are in the unlock state.

At step S1, the control part 31 of the on-vehicle lock/unlock device 3 controls the LF wave transmitting part 32 to transmit the search radio wave signals through the interior antennas 48 to 50 and the exterior antennas 4 to 47 in order to detect a position of the portable device 2 for judging whether the portable device 2 is in the interior of the passenger compartment or in the exterior of the motor vehicle, and then the flow goes to step S2.

At the step S2, the control part 31 judges, based on a signal outputted from the portable device 2, whether or not the portable device 2 has made response. If YES, the flow goes to step S6, while, if NO, the flow goes to step S3.

At the step S3, the control part 31 judges whether or not its process-interruption conditions are met, where the process-interruption conditions contain an interruption request from a system of a microcomputer of the on-vehicle lock/unlock device 3 for example. If YES, the process is ended, while, if NO, the flow goes to step S4.

At the step S4, the control part 31 of the on-vehicle lock/unlock device 3 controls the LF wave transmitting part 32 to transmit the search radio wave signals through the interior antennas 48 to 50 and the exterior antennas 4 to 47 in order to detect the position of the portable device 2 for judging whether the portable device 2 is at an inner side of the passenger compartment or at an outer side of the motor vehicle, and then the flow goes to step S5.

At the step S5, the control part 31 judges, based on the response radio wave outputted from the portable device 2, whether or not the portable device 2 has made response. If YES, the flow goes to step S6, while, if NO, the flow returns to the step S3.

At the step S6, the control part 31 determines the position of the portable device 2 based on a judgment result of whether the response radio wave of the portable device 2 has been receive through at least one of the interior antennas 48 to 50 or through at least one of the exterior antennas 45 to 47. If it is in the passenger compartment, the flow goes to step S7, while, if it is at the outer side of the motor vehicle, the flow goes to step S10.

At the step S7, the control part 31 judges whether or not its process-interruption conditions are met, where the process-interruption conditions contain the interruption request from the system of the microcomputer of the on-vehicle lock/unlock device 3 for example. If YES, the process is ended, while, if NO, the flow goes to step S8.

At the step S8, the control part 31 of the on-vehicle lock/unlock device 3 controls the LF wave transmitting part 32 to transmit the search radio wave signals through the interior antennas 48 to 50 and the exterior antennas 4 to 47 in order to detect the position of the portable device 2 for judging whether the portable device 2 is in the interior of the passenger compartment or in the exterior of the motor vehicle, and then the flow goes to step S9.

At the step S9, the control part 31 judges, based on the signal outputted from the portable device 2, whether or not the portable device 2 has made response. If YES, the flow returns to the step S6, while, if NO, the flow returns to the step S3.

At the step S10, the control part 31 judges the door open/close states based on open/close information signals outputted from the door open/close-signal input part 34. If at least one of the doors is in the open state in a case where the portable device 2 is judged to be at the outer side of the motor vehicle at the step S6, the flow goes to step S15, while, if all of the doors are in the close state, the flow goes to step S11.

At the step S11, the control part 31 judges whether or not its process-interruption conditions are met, where the process-interruption conditions contain the interruption request from the system of the microcomputer of the on-vehicle lock/unlock device 3 for example. If YES, the process is ended, while, if NO, the flow goes to step S12.

At the step S12, the control part 31 of the on-vehicle lock/unlock device 3 controls the LF wave transmitting part 32 to transmit the search radio wave signals through the interior antennas 48 to 50 and the exterior antennas 4 to 47 in order to detect the position of the portable device 2 for judging whether the portable device 2 is in the interior of the passenger compartment or in the exterior of the motor vehicle, and then the flow goes to step S13.

At the step S13, the control part 31 judges, based on the signal outputted from the portable device 2, whether or not the portable device 2 has made response. If YES, the flow returns to the step S6, while, if NO, the flow goes to step S14.

At the step S14, the control part 31 outputs the lock command signal to the lock-command output part 36 to lock all the door locks, and then the process is ended.

At the step S15, the control part 31 judges whether or not its process-interruption conditions are met, where the process-interruption conditions contain the interruption request from the system of the microcomputer of the on-vehicle lock/unlock device 3 for example. If YES, the process is ended, while, if NO, the flow goes to step S16.

At the step S16, the control part 31 of the on-vehicle lock/unlock device 3 controls the LF wave transmitting part 32 to transmit the search radio wave signals through the interior antennas 48 to 50 and the exterior antennas 4 to 47 in order to detect the position of the portable device 2 for judging whether the portable device 2 is in the interior of the passenger compartment or in the exterior of the motor vehicle, and then the flow goes to step S17.

At the step S17, the control part 31 judges, based on the signal outputted from the portable device 2, whether or not the portable device 2 has made response. If YES, the flow returns to the step S6, while, if NO, the flow goes to step S18.

At the step S18, the control part 31 judges the door open/close states based on open/close information signals outputted from the door open/close-signal input part 34. If at least one of the doors is in the open state in a case where the portable device 2 is judged to be at the outer side of the motor vehicle at the step S6, the flow returns to step S15, while, if all of the doors are in the close state, the flow goes to step S19.

At the step S19, the control part 31 of the on-vehicle lock/unlock device 3 controls the LF wave transmitting part 32 to transmit the search radio wave signals through the interior antennas 48 to 50 and the exterior antennas 4 to 47 in order to detect the position of the portable device 2 for judging whether the portable device 2 is in the interior of the passenger compartment or in the exterior of the motor vehicle, and then the flow goes to step S20.

At the step S20, the control part 31 judges, based on the signal outputted from the portable device 2, whether or not the portable device 2 has made response. If YES, the flow returns to the step S6, while, if NO, the flow goes to step S21.

At the step S21, the control part 31 outputs the lock command signal to the lock-command output part 36 to lock all the door locks, and then the flow goes to step S22.

At the step S22, the control part 31 judges whether or not an elapsed time, counted from the time when the door locks become the lock state at the step S21, has passed over a predetermined time T1sec. If YES, the process is ended, while, if NO, the flow goes to step S23. The predetermined time T1 is set to be a few minutes in this embodiment for example. This setting is preferable so that the user can be relatively near the motor vehicle and has time enough for noticing. Setting the predetermined time T 1 too short causes the user to have time not enough for opening the door, while setting it too long may not prevent theft.

At the step S23, the control part 31 judges whether or not an unlock operation has been performed. If YES, the flow goes to step S24, while, if NO, the flow returns to the step S22.

At the step S24, the control part 31 outputs the unlock command signal to the unlock-command output part 37 to unlock the door locks that has been closed last, and the process is ended.

In the keyless entry system 1 of the embodiment, when the user moves, with the portable device 2, out of the motor vehicle C and also out of an exteriorly detectable area AA, leaving one door, for example a driver's door, open, the keyless entry control is executed similarly to that shown in the states (a) to (d) of FIG. 4 in a case where the keyless entry system 1 and the battery are normal. Specifically, the control part 31 executes the step S1 to the step S6, and at the step S6 the control part 31 judges the portable device 2 to be at the outer side of the motor vehicle C to advance the flow to the step S10, where it judges that the one door is opened and advances the flow to the step S15. Incidentally, the exteriorly detectable area is an area where the on-vehicle lock/unlock device 3 can receive the response radio wave and detect the portable device 2.

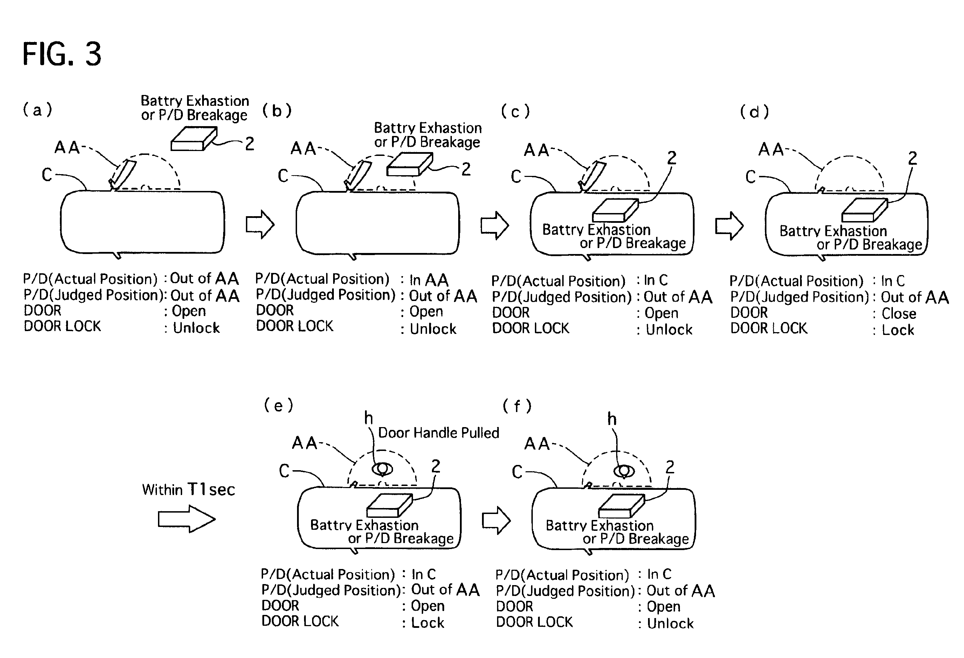

After then, when the portable device 2 becomes unavailable because of battery exhaustion or breakage of the portable device 2, the communication between the portable device 2 and the on-vehicle lock/unlock device 3 becomes impossible. Consequently, at the step S16, the control part 31 cannot detect the RF wave signals from the portable device 2, which advances the flow to the step S17, and then to the step S18. At the step S18, it judges that the one door is opened, and accordingly the flow goes to the step S15. In this state, shown in (a) of FIG. 3, the steps S15 to S18 are repeated. The door lock of the driver's door is kept unlocked.

Next, as shown in (b) of FIG. 3, the portable device 2 cannot transmit the RF wave signals because of the inoperative portable device 2, although the user comes within the exteriorly detectable area AA with the portable device 2. Consequently, the door lock of the driver's door is kept open, and the steps S15 to S18 are repeated in this state. The door lock is kept unlocked and the steps S15 to S18 are kept repeated when the user enters the passenger compartment and stays there as shown in (c) of FIG. 3, because the communication therebetween is impossible.

Then the user places the portable device 2 in the passenger compartment intentionally or unintentionally and close the door as shown in (d) of FIG. 3. The door open/close-signal input part 34 sends door close signals to the control part 31, which carries out a judgment process of the step S18 and detects all the door to be closed. Accordingly, the flow goes to the step S19, where the control part 31 searches for the portable device 2, and advances the flow to the step S20, where it cannot detect the RF wave signal therefrom to advance the flow to the step S21.

At the step S21, the control part 31 outputs the lock command signal to the lock-command output part 36, which causes the door locks to lock all the doors as shown in (e) of FIG. 3. After the door lock, the elapsed time is counted so that a door unlock process can be performed by the time when the elapsed time passes over the predetermined time T1, where the steps S22 and S23 are repeated. This allows the user to open the door within the predetermined time T1 when he or she perceives the key with the portable device 2 being locked in the passenger compartment.

Specifically, the user's pulling the door handle outwardly within the predetermined time T1 after the doors have been locked is detected by the door sensor, and the door-handle switch signal input part 51 inputs the door open signal to the control part 31. The control part 31 judges an unlock operation by a process of the step S23 to advance the flow to the step S24, where it outputs the unlock command signal to the unlock-command output part 37. Consequently, the door closed last is shifted to be in the unlock state, so that the user can get the key.

Incidentally, the user may be easily aware that the key has been locked in the compartment, because of locking sound of the door locks and/or temporally lighting of lumps which are automatically generated when the doors are locked. The user may be aware by noticing that he or she forgot a bag with the key in the passenger compartment or by other reasons.

In the keyless entry system 1 of the embodiment, the door, which is capable of being unlocked within the predetermined time T1 by the process of the steps S22 to S24, is limited to the door which has been closed last, since the door locks are not locked by the process of the step S18 in a state where one of the doors is opened. This prevents other door(s) from being opened by another person, thereby improving security of the motor vehicle.

In addition, the process of the keyless entry system 1 of the embodiment periodically repeats process of searching the portable device 2 in a short period, by using the steps S1, S4, S8, S12, S16, and S19. This substantially corresponds to constant carrying-out of the process of searching the portable device 2. Accordingly, the control part 31 can judge when and how the communication between the portable device 2 and the on-vehicle device 3 fails in. For example, the control part 31 starts to count time after shifting from a first state where the portable device 2 is detected by the interior antennas 48 to 50 to a second state where it is detected by the exterior antennas 45 to 47, and ends its counting when it cannot be detected by the exterior antennas 45 to 47. If this counted time is very short, the control part 31 judges that the portable device 2 has been locked in the passenger compartment or the portable device 2 is in an abnormal state, and allows the unlock of the door lock due to a manually opening operation of the user. This can prevent the portable device 2 from being kept locked in the passenger compartment, improving security of the motor vehicle.

Incidentally, the keyless entry system 1 of the embodiment can surely lock the door after the predetermined time T1 in a case where the user with the portable device 2 moves out of the exteriorly detectable area AA, leaving the door open, and then a fellow passenger closes the door. This can provide the user with convenience. This state where the portable device 2 is moved out of the exteriorly detectable area AA corresponds to the state where the portable device 2 is not detected, and therefore basic operations in their states are similar to each other, and its description is omitted.

The keyless entry system 1 of the embodiment has the following advantages.

The keyless entry system 1 of the embodiment allows the door to be manually opened by the user within the predetermined time, which can prevent the portable device 2 or the key from being kept locked.

It substantially continuously keeps detecting the portable device 2, which can detect when and how the communication between the portable device 2 and the on-vehicle device 3 fails in.

It allows only the door opened at last to be unlocked due to the manually opening operation of the user, which improves the security of the motor vehicle.

While there have been particularly shown and described with reference to preferred embodiments thereof, it will be understood that various modifications may be made therein.

For example, the authentication of the ID code, performed by the on-vehicle lock/unlock device 3, may use one ID code which is set in each motor vehicle, or a plurality of ID codes which are set differently between in the portable device 2 and in the on-vehicle lock/unlock device 3.

The portable device 2 or the motor vehicle may be provided with a request switch for selecting a door to be controlled for example, and an operation of the request switch may be combined with the above-described functions of the keyless entry system 1.

In order to detect the portable device 2 to be whether it is in the passenger compartment or out of the motor vehicle, the exterior antennas 45 to 47 and the interior antennas 48 to 50 may be replaced by a plurality of antennas provided at different positions at the interior or the exterior of the motor vehicle. The position of the portable device 2 can be detected by using strengths of received radio waves at the antennas.

## Claims

1. A keyless entry system (1) adapted for a motor vehicle (c) where a lock/unlock-command output control means (36, 37) controls a door to be shifted between in a lock state and in an unlock state after an on-vehicle lock/unlock device (3) makes wireless communication with a portable device (2) to execute an authentication process,
the keyless entry system (1) being **characterized in that**
the lock/unlock-command output control means (36, 37) allows the unlocking of the door due to a manually door-opening operation by a user within a predetermined time after the door is locked, when the portable device (2) cannot be detected at an inner side of a passenger compartment and at an outer side of the motor vehicle (C) in a state where the door is closed, in a case where the portable device (2) is not detected after the portable device (2) is detected at the outer side of the motor vehicle (C) in a state where the door is opened.

2. The keyless entry system (1) according to claim 1, **characterized in that** it further comprises
a door open/close detecting means (34) for detecting an open/close state of the door. wherein
the portable device (2) includes a portable-device side receiving means (24, 25) for detecting search radio wave outputted from the on-vehicle lock/unlock device (3), and
an ID code transmitting means (22, 23) for transmitting a response radio wave containing an ID code, which is used for the authentication by the on-vehicle lock/unlock device (3), when the search radio wave is received, wherein
the on-vehicle lock/unlock device (3) includes an on-vehicle transmitting means (32, 38 to 40, 41 to 43) for transmitting the search radio wave toward an inner side of the passenger compartment and toward the outer side of the motor vehicle (c),
an on-vehicle receiving means (33, 44) for receiving the response radio wave outputted from the portable device (2), and
the lock/unlock-command output control means (36, 37) for transmitting a lock command signal or an unlock command signal according to the ID code outputted from the portable device (2), wherein
the lock/unlock-command output control means (36, 37) allows the unlocking of the door due to the manually door-opening operation by the user within the predetermined time when the ID code from the portable device (2) cannot be detected at the inner side of the passenger compartment and at the outer side of the motor vehicle (C) in the state where the door is closed, after the ID from the portable device (2) is not detected at the outer side of the motor vehicle (C) in the state where the door is opened.

3. The keyless entry system (1) according to either of claim 1 or claim 2, **characterized in that**
the on-vehicle lock/unlock device (3) continues a process of searching the portable device (2) for monitoring abnormality of the portable device (2) in the state where the door is opened.

4. The keyless entry system (1) according to any one of claims 1 to 3, **characterized in that**
the lock/unlock-command output control means (36, 37) allows the unlocking of only the door which has been closed by the user at last.

## Patentansprüche

1. Schlüsselloses Zugangssystem (1) für ein Kraftfahrzeug (c), wobei ein Steuermittel (36, 37) zur Ausgabe eines Verriegelungs-/Entriegelungsbefehls die Umschaltung einer Tür zwischen einem verriegelten Zustand und einem entriegelten Zustand steuert, nachdem eine an Bord des Fahrzeugs angeordnete Verriegelungs-/Entriegelungsvorrichtung (3) eine drahtlose Kommunikation mit einer tragbaren Vorrichtung (2) durchgeführt hat, um einen Authentifizierungsprozeß auszuführen,
wobei das schlüssellose Zugangssystem (1) **dadurch gekennzeichnet ist, daß**
das Steuermittel (36, 37) zur Ausgabe eines Verriegelungs-/Entriegelungsbefehls nach der Verriegelung der Tür eine bestimmte Zeit lang die Entriegelung der Tür durch einen manuellen Türöffnungsvorgang durch einen Benutzer zuläßt, wenn in einem geschlossenen Zustand der Tür die tragbare Vorrichtung (2) nicht auf einer Innenseite des Fahrgastraums und auf einer Außenseite des Kraftfahrzeugs (c) erkannt werden kann, falls die tragbare Vorrichtung (2) nicht erkannt wird, nachdem die tragbare Vorrichtung (2) in einem geöffneten Zustand der Tür auf der Außenseite des Kraftfahrzeugs (C) erkannt worden ist.

2. Schlüsselloses Zugangssystem (1) nach Anspruch 1, **dadurch gekennzeichnet, daß** es außerdem umfaßt
ein Erkennungsmittel (34) Tür geöffnet/geschlossen zur Erkennung eines geöffneten/geschlossenen Zustandes der Tür, wobei
die tragbare Vorrichtung (2) ein Empfangsmittel (24, 25) der tragbaren Vorrichtung umfaßt, um eine Suchfunkwelle zu erkennen, die von der an Bord des Fahrzeugs angeordneten Verriegelungs-/Entriegelungsvorrichtung (3) ausgegeben wird, und
ein ID-Code-Sendemittel (22, 23) zum Senden einer Antwortfunkwelle, die einen ID-Code enthält, der zur Authentifizierung durch die im Fahrzeug angeordnete Verriegelungs-/Entriegelungsvorrichtung (3) verwendet wird, wenn die Suchfunkwelle empfangen wird, wobei
die an Bord des Fahrzeugs angeordnete Verriegelungs-/Entriegelungsvorrichtung (3) ein an Bord des Fahrzeugs angeordnetes Sendemittel (32, 38 bis 40, 41 bis 43) umfaßt, um die Suchfunkwelle zu einer Innenseite des Fahrgastraums und zur Außenseite des Kraftfahrzeugs (c) zu senden,
ein an Bord des Fahrzeugs angeordnetes Empfangsmittel (33, 44) zum Empfangen der Antwortfunkwelle, die von der tragbaren Vorrichtung (2) ausgegeben wurde, und
das Steuermittel zur Ausgabe eines Verriegelungs-/Entriegelungsbefehls (36, 37), um dem von der tragbaren Vorrichtung (2) ausgegebenen ID-Code entsprechend ein Verriegelungsbefehlssignal oder ein Entriegelungsbefehlssignal zu senden, wobei
das Steuermittel (36, 37) zur Ausgabe eines Verriegelungs-/Entriegelungsbefehls innerhalb der vorbestimmten Zeit die Entriegelung der Tür durch einen manuellen Türöffnungsvorgang durch einen Benutzer zuläßt, wenn im geschlossenen Zustand der Tür der ID-Code von der tragbaren Vorrichtung (2) auf der Innenseite des Fahrgastraums und auf der Außenseite des Kraftfahrzeugs (c) nicht erkannt werden kann, nachdem im geöffneten Zustand der Tür der ID-Code von der tragbaren Vorrichtung (2) nicht auf der Außenseite des Kraftfahrzeugs (C) erkannt wurde.

3. Schlüsselloses Zugangssystem (1) nach Anspruch 1 oder 2, **dadurch gekennzeichnet, daß**
die an Bord des Fahrzeugs angeordnete Verriegelungs-/Entriegelungsvorrichtung (3) im geöffneten Zustand der Tür einen Prozeß des Suchens der tragbaren Vorrichtung (2) fortsetzt, um auf eine Anomalie der tragbaren Vorrichtung (2) hin zu überwachen.

4. Schlüsselloses Zugangssystem (1) nach Anspruch 1 bis 3, **dadurch gekennzeichnet, daß**
das Steuermittel (36, 37) zur Ausgabe eines Verriegelungs-/Entriegelungsbefehls die Entriegelung nur der Tür zuläßt, die zuletzt vom Benutzer geschlossen wurde.

## Revendications

1. Système d'entrée sans clé (1) adapté pour un véhicule à moteur (c) dans lequel un moyen de contrôle de sortie de commande de verrouillage/déverrouillage (36, 37) contrôle une porte afin qu'elle passe d'un état verrouillé à un état déverrouillé après qu'un dispositif de verrouillage/déverrouillage intégré au véhicule (3) ait effectué une communication sans fil avec un dispositif portable (2) de façon à exécuter un processus d'authentification,
le système d'entrée sans clé (1) étant **caractérisé en ce que**
le moyen de contrôle de sortie de commande de verrouillage/déverrouillage (36, 37) permet le déverrouillage de la porte par une opération manuelle d'ouverture de porte par un utilisateur, pendant une période de temps prédéterminée après que la porte ait été verrouillée, lorsque le dispositif portable (2) ne peut pas être détecté d'un côté intérieur d'un habitacle et d'un côté extérieur du véhicule à moteur (C) alors que la porte est fermée, lorsque le dispositif portable (2) n'est pas détecté après que le dispositif portable (2) ait été détecté au niveau du côté extérieur du véhicule à moteur (C) alors que la porte est ouverte.

2. Système d'entrée sans clé (1) selon la revendication 1, **caractérisé en ce qu'**il comprend en outre
un moyen de détection d'ouverture/fermeture de porte (34) destiné à détecter un état d'ouverture/fermeture de la porte, dans lequel
le dispositif portable (2) comprend un moyen de réception côté dispositif portable (24, 25), destiné à détecter une onde radio de recherche transmise par le dispositif de verrouillage/déverrouillage intégré au véhicule (3), et
un moyen de transmission de code ID (22, 23) destiné à transmettre une onde radio de réponse contenant un code ID, qui est utilisé pour l'authentification par le dispositif de verrouillage/déverrouillage intégré au véhicule (3) , lorsque l'onde radio de recherche est reçue, dans lequel
le dispositif de verrouillage/déverrouillage intégré au véhicule (3) comprend un moyen de transmission intégré au véhicule (32, 38 à 40, 41 à 43) destiné à transmettre l'onde radio de recherche vers un côté intérieur de l'habitacle et vers le côté extérieur du véhicule à moteur (c),
un moyen de réception intégré au véhicule (33, 44), destiné à recevoir l'onde radio de réponse transmise par le dispositif portable (2), et
le moyen de contrôle de sortie de commande de verrouillage/déverrouillage (36, 37) destiné à transmettre un signal de commande de verrouillage ou un signal de commande de déverrouillage selon le code ID transmis par le dispositif portable (2), dans lequel
le moyen de contrôle de sortie de commande de verrouillage/déverrouillage (36, 37) permet le déverrouillage de la porte par l'opération manuelle d'ouverture de porte par l'utilisateur, pendant la période de temps prédéterminée, lorsque le code ID provenant du dispositif portable (2) ne peut être détecté du côté intérieur de l'habitacle et du côté extérieur du véhicule à moteur (C) alors que la porte est fermée, après que l'ID provenant du dispositif portable (2) n'ait pas été détecté au niveau du côté extérieur du véhicule à moteur (C) alors que la porte est ouverte.

3. Système d'entrée sans clé (1) selon la revendication 1 ou la revendication 2, **caractérisé en ce que**
le dispositif de verrouillage/déverrouillage intégré au véhicule (3) continue un processus de recherche du dispositif portable (2) afin de surveiller toute anomalie du dispositif portable (2) alors que la porte est ouverte.

4. Système d'entrée sans clé (1) selon l'une quelconque des revendications 1 à 3, **caractérisé en ce que**
le moyen de contrôle de sortie de commande de verrouillage/déverrouillage (36, 37) permet le déverrouillage uniquement de la porte qui a été fermée par l'utilisateur en dernier.
